# EUROPÄISCHE PATENTSCHRIFT

(11) **EP 2 849 967 B1**
(45) Veröffentlichungstag und Bekanntmachung des Hinweises auf die Patenterteilung: **31.10.2018**
(21) Anmeldenummer: 13722761.7
(22) Anmeldetag: 15.05.2013
(51) Int. Cl.: B60N 3/10

(54) **AUFNAHMEVORRICHTUNG FÜR WENIGSTENS EIN FLASCHEN- ODER BECHERBEHÄLTNIS IN EINEM FAHRZEUGINNENRAUM**
RECEIVING DEVICE FOR AT LEAST ONE BOTTLE OR CUP CONTAINER IN A VEHICLE INTERIOR
DISPOSITIF D'ACCUEIL POUR AU MOINS UNE BOUTEILLE OU UN GOBELET DANS L'ESPACE INTÉRIEUR D'UN VÉHICULE

(30) Priorität: 16.05.2012 DE 102012208278
(43) Veröffentlichungstag der Anmeldung: 25.03.2015
(73) Patentinhaber: BOS GmbH & Co. KG, 73760 Ostfildern (DE)
(72) Erfinder: SITZLER, Wolfgang, 42111 Wuppertal (DE); BOHLKE, Hartmut, 42369 Wuppertal (DE); SALEWSKI, Jürgen, 40599 Düsseldorf (DE); GÖBBELS, Andreas, 51515 Kürten (DE); ZUMMACK, Wolfram, 53842 Troisdorf (DE)
(74) Vertreter: Patentanwälte Ruff, Wilhelm, Beier, Dauster & Partner mbB
(86) Internationale Anmeldenummer: PCT/EP2013/060091
(87) Internationale Veröffentlichungsnummer: WO 2013/171282

(56) Entgegenhaltungen:
- DE-U1-202005 003 638
- DE-U1-202005 004 258
- US-A1- 2012 056 063

## Beschreibung

Die Erfindung betrifft eine Aufnahmevorrichtung für wenigstens ein Flaschen- oder Becherbehältnis in einem Fahrzeuginnenraum mit einem Aufnahmebereich, sowie mit einem relativ zu dem Aufnahmebereich hubbeweglich gelagerten Halterahmen, und mit einem an dem Aufnahmebereich angelenkten Deckel zum Verschließen und Freigeben des Aufnahmebereiches, wobei der Deckel und der Halterahmen zumindest über einen Teil ihrer Bewegungswege mittels einer Zwangsführung miteinander gekoppelt sind.

Eine derartige Aufnahmevorrichtung ist aus der DE 20 2005 004 258 U1 bekannt. Bei der bekannten Aufnahmevorrichtung ist der Halterahmen aus einer Vertiefung heraus nach oben verlagerbar, wobei die Vertiefung durch einen Deckel verschließbar ist, der am Halterahmen angelenkt und gemeinsam mit diesem nach oben verlagerbar sowie horizontal aus der Fluchtlinie der Vertiefung herausschwenkbar ist. Eine weitere Aufnahmevorrichtung ist aus der DE 20 2005 003 638 U1 bekannt. Diese zeigt eine Aufnahmevorrichtung für wenigstens ein Flaschen- oder Becherbehältnis in einem Fahrzeuginnenraum mit einem Aufnahmebereich, sowie mit einem relativ zu dem Aufnahmebereich hubbeweglich gelagerten Halterahmen, und mit einem an dem Aufnahmebereich angelenkten Deckel zum Verschließen und Freigeben des Aufnahmebereiches, wobei der Deckel und der Halterahmen zumindest über einen Teil ihrer Bewegungswege mittels einer Zwangsführung miteinander gekoppelt sind, wobei die Zwangsführung eine am Aufnahmebereich gelagerte Steuermechanik aufweist, die mit dem Deckel und mit dem Halterahmen bewegungsübertragend gekoppelt ist, und wobei für eine ausgefahrene Funktionsstellung des Halterahmens eine Blockiereinrichtung vorgesehen ist.

Eine weitere Aufnahmevorrichtung ist aus der EP 1380466 B1 bekannt. Die bekannte Aufnahmevorrichtung ist für den Einbau in einer Mittelkonsole eines Fahrzeuginnenraumes vorgesehen. Die bekannte Aufnahmevorrichtung weist einen becherförmigen Aufnahmebereich auf, der in der Mittelkonsole fest angeordnet ist. Innerhalb des Aufnahmebereiches ist ein ringförmiger Halterahmen hubbeweglich verschiebbar gelagert. Der Halterahmen wird zwischen seiner unteren Ruheposition, in der er in dem Aufnahmebereich versenkt angeordnet ist, und einer oberen Funktionsposition, in der er zur seitlichen Stützung eines entsprechenden Flaschen- oder Becherbehältnisses dient, durch eine Zwangsführung verlagert, die an die Schwenkbeweglichkeit eines Deckels gekoppelt ist. Der Deckel dient dazu, den Aufnahmebereich in der nach unten versenkten Ruheposition des Halterahmens zu verschließen. Beim Öffnen des Deckels wird über die Zwangsführung zwangsläufig der Halterahmen mit angehoben. Die Zwangsführung wird durch einen am Deckel angeordneten Steuerzapfen einerseits und eine durch eine Kulissenführung in der Wandung des Halterahmens gebildete Steuerkurve andererseits definiert, wobei der Zapfen während einer Aufstell- oder Schließbewegung des Deckels in der Kulissenführung geführt ist und eine entsprechende Hub- oder Senkbewegung des Halterahmens bewirkt.

Aufgabe der Erfindung ist es, eine Aufnahmevorrichtung der eingangs genannten Art zu schaffen, die eine einfache Handhabung und eine funktionssichere Aufnahme wenigstens eines Flaschen- oder Becherbehältnisses ermöglicht.

Diese Aufgabe wird durch die Merkmale des Anspruchs 1 gelöst. Die erfindungsgemäße Lösung eignet sich sowohl für stationär im Fahrzeuginnenraum angeordnete Aufnahmevorrichtungen, insbesondere im Bereich einer Mittelkonsole, als auch für Aufnahmevorrichtungen, die in beweglichen Teilen des Fahrzeuginnenraumes angeordnet sind wie insbesondere im Bereich einer beweglichen Armauflage zwischen frontseitigen Sitzen oder im Bereich einer Rückenlehnenanordnung einer Fondsitzbank, die in hochgeschwenkter Stellung als Teil der Rückenlehnenanordnung der Fondsitzbank dient. Die Aufnahmevorrichtung kann auch an anderer Stelle im Fahrzeuginnenraum vorgesehen sein, die für das Abstellen von Flaschen- oder Becherbehältnissen durch Fahrzeuginsassen geeignet ist. Die erfindungsgemäße Lösung ist in besonders vorteilhafter Weise für den Fahrzeuginnenraum eines Personenkraftwagens vorgesehen. Sie kann aber auch im Fahrzeuginnenraum von Nutzfahrzeugen oder Lastkraftwagen oder auch im Fahrzeuginnenraum von Schienenfahrzeugen vorgesehen sein.

Die Blockiereinrichtung wirkt formschlüssig in Hochrichtung und blockiert eine Absenkbewegung des Halterahmens in der ausgefahrenen Funktionsstellung nach unten. Die Blockiereinrichtung dient dazu, den Halterahmen in der ausgefahrenen Funktionsstellung zu stützen, um zu vermeiden, dass ein in den Halterahmen einzusetzendes Flaschen- oder Becherbehältnis den Halterahmen unbeabsichtigt nach unten drückt. Die Steuermechanik bewirkt über den gesamten Bewegungsweg des Halterahmens und des Deckels relativ zum Aufnahmebereich eine Zwangssteuerung.

Erfindungsgemäß ist eine Führungsmechanik zur hubbeweglichen Verlagerung des Halterahmens relativ zu dem Aufnahmebereich vorgesehen, und die Führungsmechanik umfasst an einem oberen Endbereich eine auf einen kurzen Weg begrenzte Querführung, die den Halterahmen nach Erreichen einer oberen Endlage vom Deckel weg querverlagert. Die Querführung dient als Blockiereinrichtung zum Stützen des Halterahmens in der querverlagerten Endstellung, die der ausgefahrenen Funktionsstellung entspricht, gegen ein Absenken des Halterahmens nach unten. Ergänzend kann der Querführung ein Stützabschnitt am Aufnahmebereich zugeordnet sein, der den Halterahmen in der querverlagerten Endstellung formschlüssig nach unten abstützt.

In Ausgestaltung der Erfindung umfasst die Steuermechanik wenigstens einen am Aufnahmebereich geführten und relativ zu dem Aufnahmebereich verlagerbaren Steuerkörper, der mit dem Halterahmen gekoppelt ist. Der Steuerkörper ist Teil der Steuermechanik. Der Steuerkörper kann ein- oder mehrteilig ausgeführt sein und weist vorzugsweise Führungsprofilierungen auf, die mit komplementären Führungsprofilierungen am Aufnahmebereich zusammenwirken. Zudem sind dem Steuerkörper weitere Führungsprofilierungen zugeordnet, die mit komplementären Führungsprofilierungen des Halterahmens gekoppelt sind.

In weiterer Ausgestaltung der Erfindung ist eine Bewegungsrichtung des Steuerkörpers unterschiedlich zu einer Hubbewegungsrichtung des Halterahmens. In vorteilhafter Weise ist der Steuerkörper am Aufnahmebereich quer oder schräg zu einer Hubbewegungsrichtung des Halterahmens beweglich gelagert.

In weiterer Ausgestaltung der Erfindung ist eine Dämpfungseinheit zur Dämpfung von Verlagerungsbewegungen des Steuerkörpers vorgesehen. Aufgrund der Zwangskopplung des Steuerkörpers sowohl mit dem Halterahmen als auch mit dem Aufnahmebereich gewährleistet die Dämpfungseinheit eine gleichmäßige Öffnungs- oder Schließbewegung des Deckels wie auch eine gleichmäßige Hub- oder Senkbewegung des Halterahmens. Hierdurch können Anschlaggeräusche in Endstellungen des Deckels und des Halterahmens vermieden oder reduziert werden. Ein Anheben des Deckels aus seiner Schließstellung erfolgt vorzugsweise durch Entriegelung des Deckels und eine auf den Deckel wirkende Federkraft. Der wenigstens eine Steuerkörper sowie der Halterahmen werden zwangsläufig mitbewegt. Eine Schließbewegung des Deckels erfolgt manuell durch entsprechende Kräfte der Hand einer Bedienperson. Aufgrund der Zwangskopplung mit dem wenigstens einem Steuerkörper und dem Halterahmen werden auch Steuerkörper und Halterahmen zwangsläufig in die Ruhestellung zurückgeführt.

Weitere Vorteile und Merkmale der Erfindung ergeben sich aus den Ansprüchen. Nachfolgend sind bevorzugte Ausführungsbeispiele der Erfindung beschrieben und anhand der Zeichnungen dargestellt.
- Fig. 1: zeigt in perspektivischer Darstellung eine Ausführungsform einer nicht zur Erfindung gehörenden Aufnahmevorrichtung im Bereich einer Mittelkonsole eines Fahrzeuginnenraumes,
- Fig. 2: in vergrößerter Darstellung die Aufnahmevorrichtung nach Fig. 1 mit geschlossenem Deckel,
- Fig. 3: die Aufnahmevorrichtung nach den Fig. 1 und 2 mit geöffnetem Deckel,
- Fig. 4: die Aufnahmevorrichtung nach den Fig. 2 und 3 in einer Schnittdarstellung mit geschlossenem Deckel,
- Fig. 5: die Aufnahmevorrichtung nach Fig. 4 in einer Schnittdarstellung mit geöffnetem Deckel,
- Fig. 6: eine weitere Ausführungsform einer nicht zur Erfindung gehörenden Aufnahmevorrichtung ähnlich der Ausführungsform nach den Fig. 1 bis 5 in einer Schnittdarstellung mit geschlossenem Deckel,
- Fig. 7: die Aufnahmevorrichtung nach Fig. 6 mit geöffnetem Deckel,
- Fig. 8: eine Ausführungsform einer erfindungsgemäßen Aufnahmevorrichtung in geschlossener Ruhestellung,
- Fig. 9: die Aufnahmevorrichtung nach Fig. 8 in geöffneter Funktionsstellung,
- Fig. 10: eine Schnittdarstellung der Aufnahmevorrichtung gemäß Fig. 8,
- Fig. 11: eine Schnittdarstellung der Aufnahmevorrichtung gemäß Fig. 9,
- Figur 12: eine Seitenansicht der Aufnahmevorrichtung nach Fig. 8,

- Figur 13: eine Seitenansicht der geöffneten Stellung der Aufnahmevorrichtung gemäß Fig. 9,
- Fig. 14: schematisch eine Teildarstellung der Aufnahmevorrichtung nach Fig. 8,
- Fig. 15: schematisch die Teildarstellung nach Fig. 14 in einer halbgeöffneten Zwischenstellung,
- Fig. 16: die Teildarstellung nach den Figuren 14 und 15 in einer geöffneten Endstellung,
- Fig. 17: in einer Explosionsdarstellung einen Aufnahmebereich und einen Halterahmen der Aufnahmevorrichtung nach den Figuren 8 und 9,
- Fig. 18: eine schematische Seitenansicht ähnlich Fig. 12,
- Fig. 19: schematisch eine Darstellung der Aufnahmevorrichtung gemäß Fig. 13 unter Weglassung des Aufnahmebereiches,
- Fig. 20: eine schematische Darstellung der Aufnahmevorrichtung ähnlich Fig. 13,
- Fig. 21: bis 23 die Aufnahmevorrichtung nach den Figuren 8 bis 20 mit schematischer Darstellung auch unsichtbarer Linien von Führungsprofilierungen zwischen Aufnahmebereich, Halterahmen und Steuerkörper,
- Fig. 24: eine weitere Ausführungsform einer erfindungsgemäßen Aufnahmevorrichtung in geschlossener Ruhestellung,

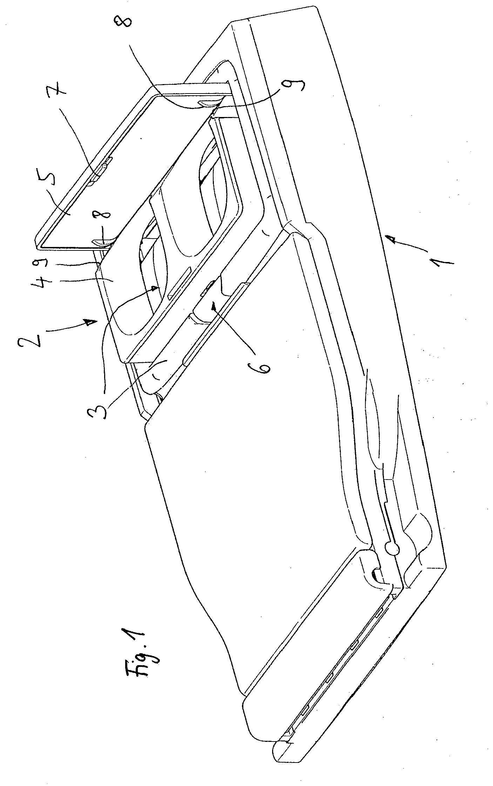

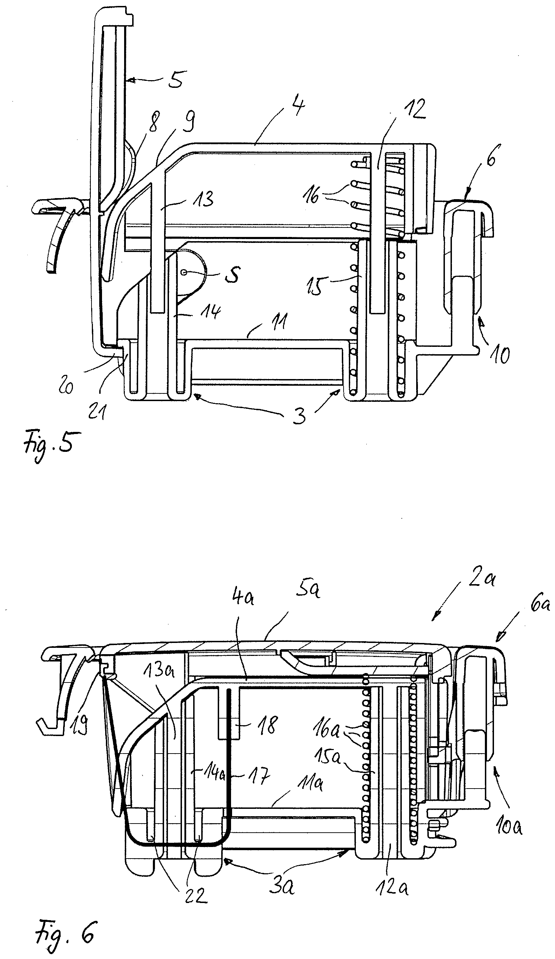

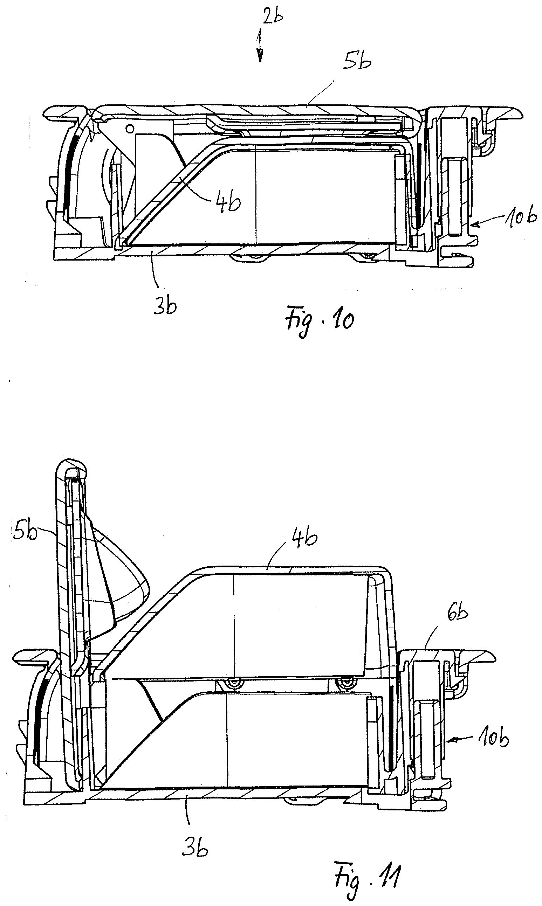

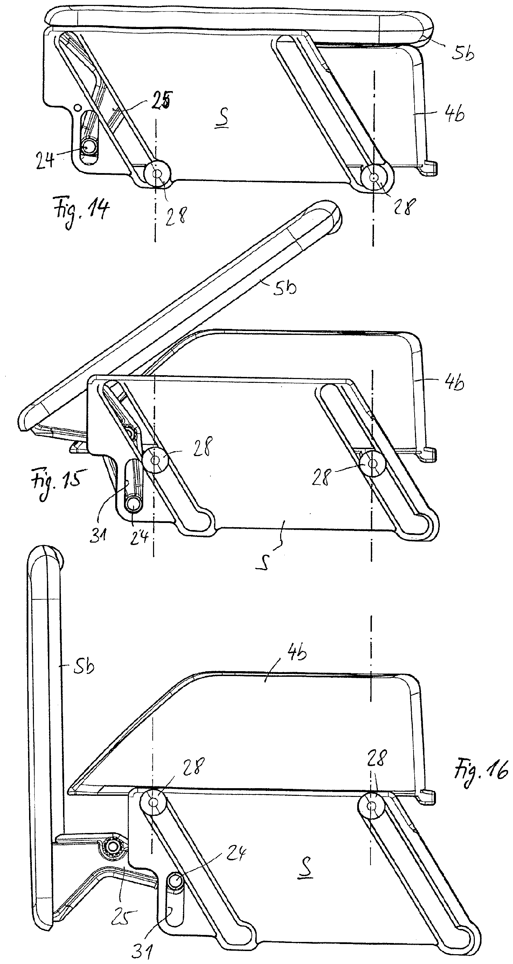

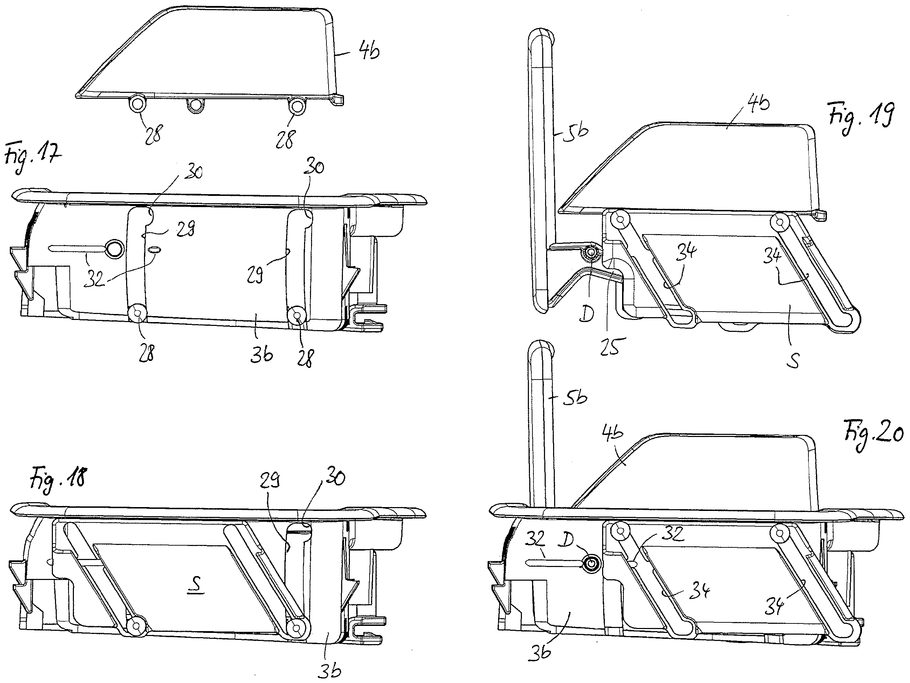

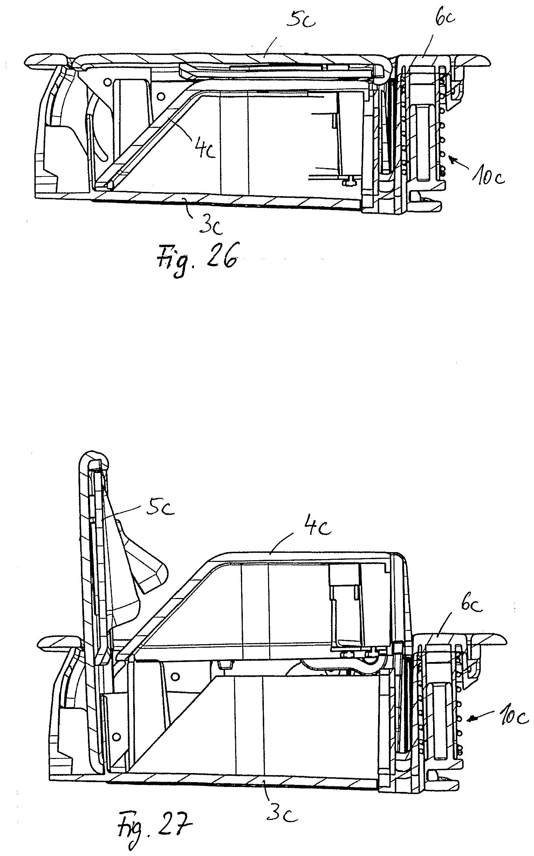

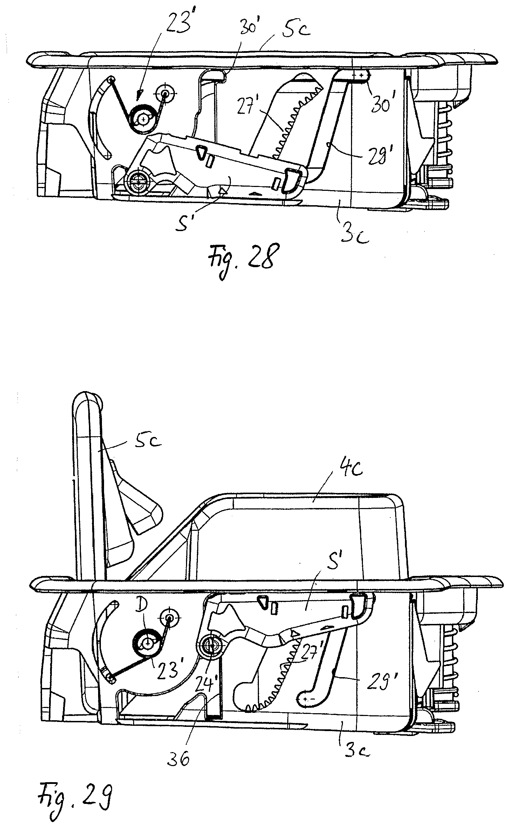

- Fig. 25: die Aufnahmevorrichtung nach Fig. 24 in geöffneter Funktionsstellung,
- Fig. 26: eine Schnittdarstellung der Aufnahmevorrichtung nach Fig. 24,
- Fig. 27: eine Schnittdarstellung der Aufnahmevorrichtung in der Position gemäß Fig. 25,
- Fig. 28: eine Seitenansicht der Aufnahmevorrichtung nach Fig. 24,
- Fig. 29: eine Seitenansicht der Aufnahmevorrichtung in der Position gemäß Fig. 25,
- Fig. 30: schematisch die Aufnahmevorrichtung nach Fig. 28 mit Darstellung sichtbarer und unsichtbarer Linien von Führungsprofilierungen eines Steuerkörpers, eines Aufnahmebereiches und des Halterahmens und
- Fig. 31: schematisch eine Darstellung ähnlich Fig. 30, jedoch in geöffneter Funktionsstellung.
Ein Personenkraftwagen weist in seinem Fahrzeuginnenraum zwischen Fahrer- und Beifahrerseite oder auch im Bereich einer Fondsitzbank eine Mittelarmlehne 1 auf, in der eine Aufnahmevorrichtung 2 für zwei Flaschen- oder Becherbehältnisse gemäß den Fig. 1 bis 5 angeordnet ist. Die Mittelarmlehne 1 kann gemäß Fig. 1 unterseitig mit einer Polsterung versehen sein, um in nach oben geschwenkter Funktionsstellung in eine Rückenlehnenanordnung der Fondsitzbank integriert zu sein und mit dieser Polsterung einen Teil der Rückenlehnenanordnung zu bilden. Die Anordnung weiterer Ausführungsformen von Aufnahmevorrichtungen gemäß den Figuren 6 bis 31 entspricht der Anordnung und Unterbringung der Aufnahmevorrichtung 2, wie sie anhand der Fig. 1 dargestellt und beschrieben wird.

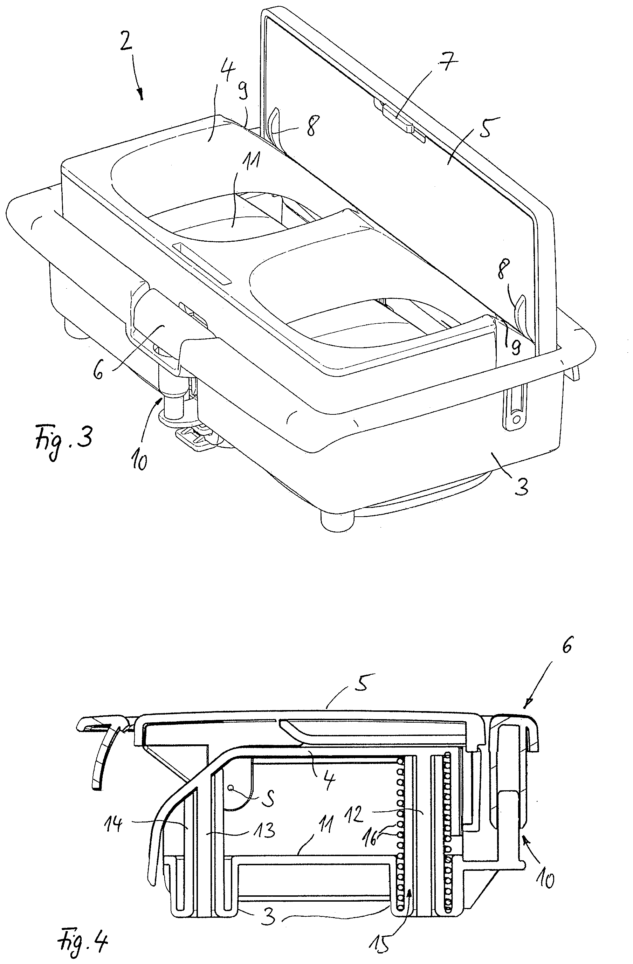

Die Aufnahmevorrichtung 2 weist einen formstabilen, gehäuseartigen Aufnahmebereich 3 auf, der in einem entsprechenden Rahmenabschnitt der Mittelarmlehne 1 versenkt aufgenommen ist. Der Aufnahmebereich 3 ist bodenseitig mit einem Stützboden 11 versehen, auf dem entsprechende Flaschen- oder Becherbehältnisse abstellbar sind. Der Stützboden 11 kann formstabil oder nachgiebig, insbesondere elastisch weich, gestaltet sein, um eine Dämpfung für abgestellte Behältnisse zu erzielen. Nach oben ist der Aufnahmebereich 3 offen und durch einen schwenkbeweglich am Aufnahmebereich 3 gelagerten Deckel 5 verschließbar. Der Deckel 5 ist um eine quer zu einer Mittellängsachse der Mittelarmlehne 1 ausgerichtete Schwenkachse S am Aufnahmebereich 3, der ein im Wesentlichen wannenförmiges Gehäuse für die Aufnahmevorrichtung 2 bildet, schwenkbeweglich gelagert. Der Aufnahmebereich 3 umschließt einen quaderartigen Aufnahmeraum, der nach oben offen ist, und in dem ein mit einer etwa rechteckigen Grundfläche versehener Halterahmen 4 hubbeweglich gelagert ist. Der Aufnahmeraum des Aufnahmebereiches 3 ist durch den Deckel 5 verschließbar, der im Bereich einer Längsseite des Aufnahmeraumes schwenkbeweglich gelagert ist. In einer Schließposition (Fig. 4) schließt eine Oberseite des Deckels 5 etwa bündig mit einer Oberseite des Aufnahmebereiches 3 und mit einer Oberseite der Mittelarmlehne 1 ab. In der geöffneten Freigabeposition des Deckels 5 ist der Deckel 5 um etwa 90° relativ zu seiner Schließposition nach oben verschwenkt, so dass der Deckel 5 im Wesentlichen vertikal ausgerichtet an einem Längsrand der Aufnahmeöffnung des Aufnahmebereiches 3 anliegt (siehe Fig. 1, 3 und 5). In der Schließposition ist der Deckel 5 mittels einer Verriegelungseinheit 6, 10 lösbar arretiert. Die Verriegelungseinheit 6, 10 ist mittels einer Push-Push-Mechanik in eine Arretierstellung oder eine Lösestellung zur Freigabe des Deckels 5 überführbar. Die Verriegelungseinheit umfasst im Bereich des Deckels 5 zudem ein Rastelement 7, mit dem die Verriegelungseinheit 6, 10 zusammenwirkt.

Der Halterahmen 4 ist mit zwei ringförmigen Aufnahmeabschnitten versehen, die zur seitlichen Sicherung und Stützung jeweils eines Flaschen- oder Becherbehältnisses dienen. Der Halterahmen 4 ist einstückig als Kunststoffformteil gestaltet und ist mit Hilfe von Linearführungen 12 bis 15 linearbeweglich in Hub- oder Senkrichtung relativ zum Aufnahmeraum etwa vertikal beweglich gelagert. Hierzu ist der Aufnahmebereich 3 mit säulenartig nach oben ragenden Hohlprofilführungen (14, 15) versehen, in die nach unten abragende Führungsstege 12, 13 des Halterahmens 4 linearbeweglich hineinragen. Die Hubbeweglichkeit des Halterahmens 4 wird durch einen Hubantrieb in Form einer Hubfederanordnung 16 unterstützt, wobei die Hubfederanordnung im Bereich von wenigstens zwei zueinander beabstandeten säulenförmigen Hohlprofilabschnitten 15 mit jeweils einer Schraubendruckfeder 16 versehen sind, die den entsprechenden Hohlprofilabschnitt 15 koaxial umgeben. Jede Schraubendruckfeder der Hubfederanordnung 16 stützt sich bodenseitig am Aufnahmebereich 3 und oberseitig an einer Innenseite des Halterahmens 4 ab, so dass die Hubfederanordnung 16 den Halterahmen 4 in Hubrichtung nach oben permanent druckbeaufschlagt.

Bei geöffnetem Deckel 5 wird der Halterahmen 4 daher durch die Hubfederanordnung 16 gemäß Fig. 5 bis zu einem Endanschlag nach oben gedrückt. Dieser Endanschlag wird beim dargestellten Ausführungsbeispiel durch den Deckel 5 gebildet, der im Bereich seiner Deckelinnenseite mit wenigstens einem Stütznocken 8 versehen ist, an der eine Stützfläche 9 im Bereich einer oberen Außenkontur des Halterahmens 4 in der oberen Endposition des Halterahmens 4 zur Anlage kommt.

Die Schwenkbeweglichkeit des Deckels 5 ist durch einen Endanschlag 21 an einem unteren Endbereich des Aufnahmebereiches 3 begrenzt, an dem ein unterer Längsrand 20 des Deckels 5 in der geöffneten Freigabestellung des Deckels 5 anschlägt. Beim Auftreffen der Steuerfläche 9 auf den wenigstens einen Steuernocken 8 kann der Deckel 5 daher aufgrund seiner Abstützung im Bereich des Längsrandes 20 und des Stützanschlages 21 nicht mehr weitergeschwenkt werden, so dass der in der geöffneten Freigabeposition gemäß Fig. 5 gestützte Deckel 5 auch eine zuverlässige Abstützung gegen ein weiteres nach oben Ausfahren des Halterahmens 4 bildet.

Ergänzend oder alternativ kann der Halterahmen 4 im Bereich seiner Hubführungen 12 bis 15 selbst mit wenigstens einem entsprechenden Endanschlag versehen sein, durch den verhindert wird, dass der Halterahmen 4 einen vorgegebenen Hubweg nach oben überschreitet.

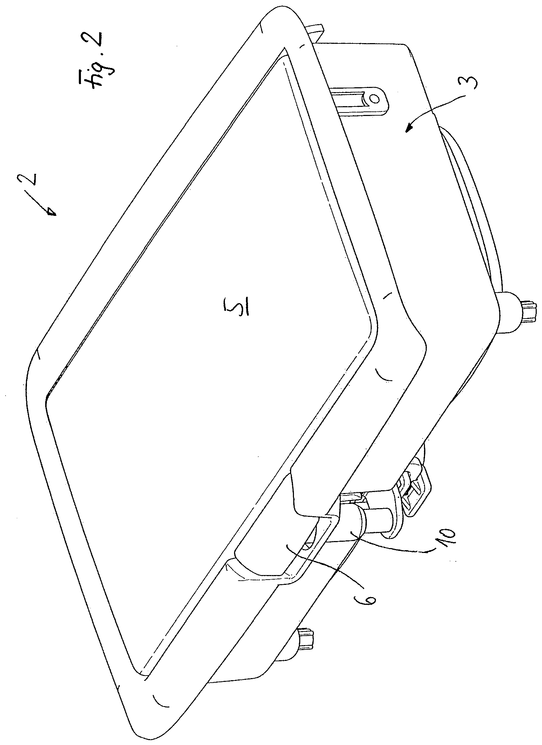

Um den Halterahmen 4 aus seiner nach oben ausgefahrenen Funktionsstellung gemäß den Fig. 1, 3 und 5 wieder in den Aufnahmeraum des Aufnahmebereiches 3 hineinzudrücken, wird in einfacher Weise der Deckel 5 aus seiner geöffneten Freigabeposition wieder in Richtung seiner Schließstellung verschwenkt. Dabei drückt der wenigstens eine Steuernocken 8 an der Unterseite des Deckels 5 gegen die schräge Steuerfläche 9 des Halterahmens 4, wodurch der wenigstens eine Steuernocken 8 zwangsläufig die Steuerfläche 9 während einer Schwenkbewegung des Deckels 5 in Richtung seiner Schließstellung nach unten zwingt. Hierdurch wird der Halterahmen 4 gegen die Druckkraft der Hubfederanordnung 16 nach unten gedrückt, bis der Deckel 5 seine Schließstellung gemäß den Fig. 2 und 4 erreicht hat. Bei Erreichen der Schließstellung 5 rastet die Verriegelungseinheit 6, 7, 10 vorzugsweise automatisch ein, so dass der Deckel 5 in seiner Schließstellung gesichert ist und arretiert bleibt. Eine Innenseite des Deckels 5 weist Stegoder Wandungsabschnitte auf, die in den Fig. 4 und 5 nicht näher bezeichnet sind. Diese Steg- oder Wandungsabschnitte halten den Halterahmen 4 gegen die Druckkraft der Hubfederanordnung 16 in seiner unteren Ruhestellung, indem sie flächig auf der Oberseite des Halterahmens 4 aufliegen. Die permanente Druckkraft der Hubfederanordnung 16 gewährleistet gleichzeitig eine Klapperfreiheit, da der Halterahmen 4 bei verschlossenem Deckel 5 in vorgespannter Stellung verbleibt.

Alternativ ist es möglich, mittels der Verriegelungseinheit 6, 7, 10 direkt den Halterahmen 4 in seiner Ruhestellung zu sichern oder aus dieser Ruhestellung heraus freizugeben. Bei dieser Ausführungsform weist der Deckel 5 keine direkte Rückhaltefunktion für den Halterahmen 4 auf, sondern dient lediglich zum Verschluss der Aufnahmeöffnung des Aufnahmebereiches 3.

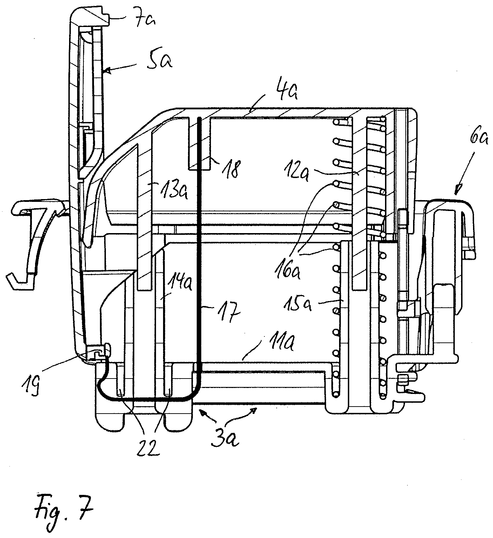

Die Ausführungsform nach den Fig. 6 und 7 entspricht im Wesentlichen der zuvor anhand der Fig. 1 bis 5 beschriebenen Ausführungsform. Zur Vermeidung von Wiederholungen wird auf die Offenbarung der Beschreibung und der Zeichnungen zu dem Ausführungsbeispiel nach den Fig. 1 bis 5 verwiesen. Funktions- oder baugleiche Teile und Abschnitte der Aufnahmevorrichtung 2a nach den Fig. 6 und 7 sind mit gleichen Bezugszeichen unter Hinzufügung des Buchstabens a versehen. Nachfolgend wird auf die maßgeblichen Unterschiede der Aufnahmevorrichtung 2a gemäß den Fig. 6 und 7 gegenüber der Aufnahmevorrichtung 2 nach den Fig. 1 bis 5 verwiesen.

Wesentlicher Unterschied bei der Aufnahmevorrichtung 2a nach den Fig. 6 und 7 ist es, dass dort eine Zwangsführung zur Bewegungskopplung des Halterahmens 4a mit dem Deckel 5a durch wenigstens ein Zugmittel in Form eines Zugseiles 17 gebildet ist. Das Zugseil 17 ist von unten her dem Haltebereich 4a zugeführt und an einem Halteabschnitt 18 mit einem Stirnendbereich an dem Halterahmen 4a befestigt. Ein gegenüberliegender Stirnendbereich des Zugseiles 17 ist an einem Seitenrand 19 des Deckels 5a befestigt. Das Zugseil 17 ist über Umlenkstege 22 an einem Bodenbereich des Aufnahmebereiches 3a innerhalb des Aufnahmebereiches 3a umgelenkt, um ein Angreifen des Zugseiles 17 am Halterahmen 4a von unten her zu ermöglichen. Hierdurch ist gewährleistet, dass auf den Halterahmen 4a durch das Zugseil 17 eine Zugkraft entgegen der Hubkraft der Hubfederanordnung 16a nach unten aufgebracht werden kann, wodurch der Halterahmen 4a gegen die Druckkraft der Hubfederanordnung 16a aus seiner Funktionsstellung gemäß Fig. 7 in die versenkte Ruheposition gemäß Fig. 6 überführt werden kann. Länge, Verlauf und Umlenkung des Zugseiles 17 sind derart gewählt, dass bei einer Schwenkbewegung des Deckels 5a nach unten zwangsläufig der Halterahmen 4a aus seiner Funktionsstellung gemäß Fig. 7 nach unten gezogen wird. Es können mehrere, über die Breite des Halterahmens 4a verteilt angeordnete Zugmittel in Form von Zugseilen 17 oder ähnlichem vorgesehen sein, die derart aufeinander abgestimmt sind, dass sie eine parallele Zugkraftbelastung auf den Halterahmen 4a ausüben.

In seiner Schließstellung kann der Deckel 5a zusätzlich oder alternativ zu der über das wenigstens eine Zugseil 17 aufgebrachten Zugkraft auf den Halterahmen 4a Druck von oben her über einen entsprechenden Steg- oder Wandungsabschnitt im Bereich der Innenseite des Deckels 5a ausüben. Der Deckel 5a ist in gleicher Weise mittels einer Verriegelungseinheit 6a, 7a, 10a in der Schließstellung manuell lösbar gesichert, wie dies bei der Ausführungsform nach den Fig. 1 bis 5 der Fall ist.

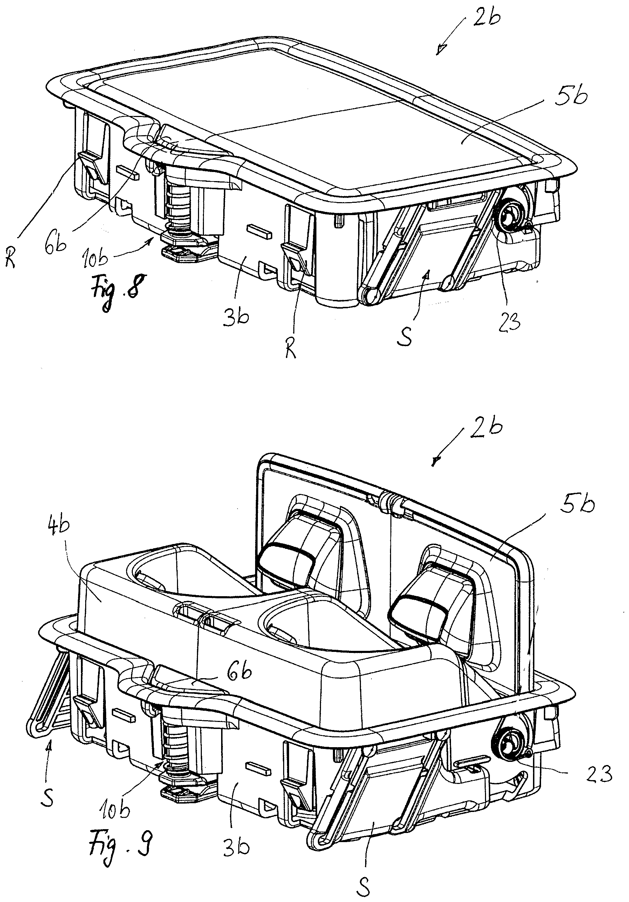

Die Aufnahmevorrichtungen 2b und 2c gemäß den Figuren 8 bis 31 sind in gleicher Weise in einem Fahrzeuginnenraum positioniert, wie dies zuvor anhand der Aufnahmevorrichtung 2 gemäß Fig. 1 beschrieben wurde. Funktionsgleiche Teile der Aufnahmevorrichtungen 2b und 2c der Aufnahmevorrichtungen 2b und 2c werden mit gleichen Bezugszeichen unter Hinzufügung der Buchstaben b und c versehen. Funktionsgleiche Abschnitte oder Teile zwischen den Aufnahmevorrichtungen 2b und 2c werden ebenfalls mit gleichen Bezugszeichen, aber unter Hinzufügung eines Strichs ', versehen.

Wesentliche Unterschiede der Aufnahmevorrichtungen 2b und 2c gegenüber den zuvor beschriebenen Aufnahmevorrichtungen gemäß den Figuren 1 bis 7 sind es, dass zur Kopplung der Schwenkbewegungen der Deckel 5b und 5c mit einer Bewegung der Halterahmen 4b, 4c zusätzliche Steuerkörper S, S' vorgesehen sind, die jeweils an gegenüberliegenden Seiten des Aufnahmebereiches 3b, 3c paarweise und synchronisiert zueinander beweglich gelagert sind. Dabei werden die Steuerkörper S, S' zur Steuerung der Bewegungen des Halterahmens 4b, 4c und des Deckels 5b, 5c in Richtungen bewegt, die unterschiedlich sind zu der Hubrichtung des jeweiligen Halterahmens 4b, 4c. Die Steuerkörper S, S' sind an dem jeweiligen Aufnahmebereich 3b, 3c geführt und beweglich gelagert. Zur Führung der Steuerkörper S, S' relativ zu dem jeweiligen Aufnahmebereich 3b, 3c sind Führungsprofilierungen in Form von Kulissenführungen, Kulissenzapfen oder Führungsstegen und Führungsnuten vorgesehen, die nachfolgend näher beschrieben werden. Bei beiden Aufnahmevorrichtungen 2b und 2c ist der jeweilige Deckel 5b, 5c durch eine Verriegelungseinheit 6b, 10b; 6c, 10c verriegelbar und freigebbar, die der Verriegelungseinheit 6, 10 gemäß den zuvor beschriebenen Ausführungsformen funktional entspricht. Zur Vermeidung von Wiederholungen wird daher bezüglich dieser Verriegelungseinheiten 6b, 10b auf die Offenbarung zu den Figuren 1 bis 7 verwiesen.

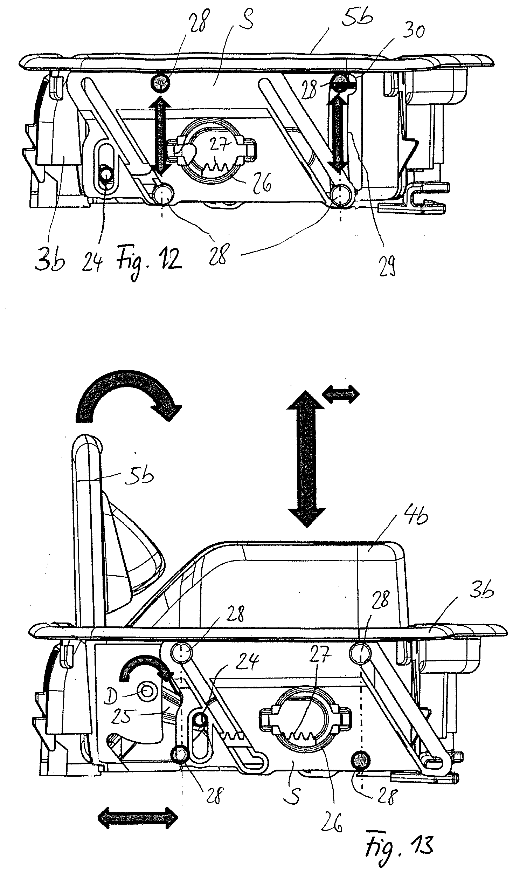

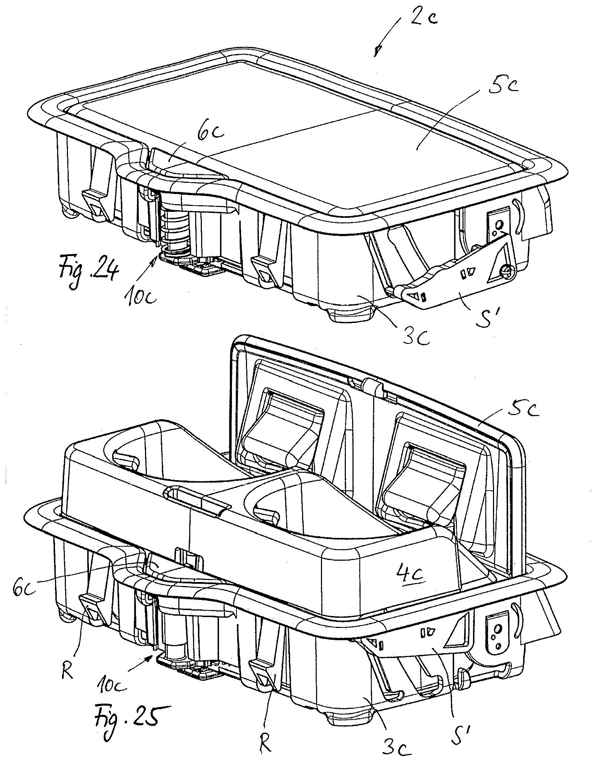

Den nachfolgend näher beschriebenen Steuerkörpern S, S' sind Dämpfungseinheiten, vorzugsweise in Form von Silikonbremsen, zugeordnet, die die Bewegungen der Steuerkörper S, S' relativ zum Aufnahmebereich dämpfen. Anhand der Figuren 12 und 13 ist eine Aufnahme 26 für eine entsprechende Silikonbremse sowie eine zugeordnete Zahnstangenführung 27 für den Steuerkörper S schematisch dargestellt. Auch die Steuerkörper S' sind mit ähnlichen Dämpfungseinheiten versehen. Dies ist anhand der Zahnstangenführung 27'gemäß den Figuren 24 bis 31 angedeutet. Da jeweils beide Steuerkörper S, S' an gegenüberliegenden Seiten des jeweiligen Aufnahmebereiches 3b, 3c an den jeweils einzelnen, gemeinsamen Deckel 5b, 5c gekoppelt sind, werden sie zwangsläufig synchronisiert zueinander bewegt, abhängig von der Bewegung des Deckels 5b, 5c.

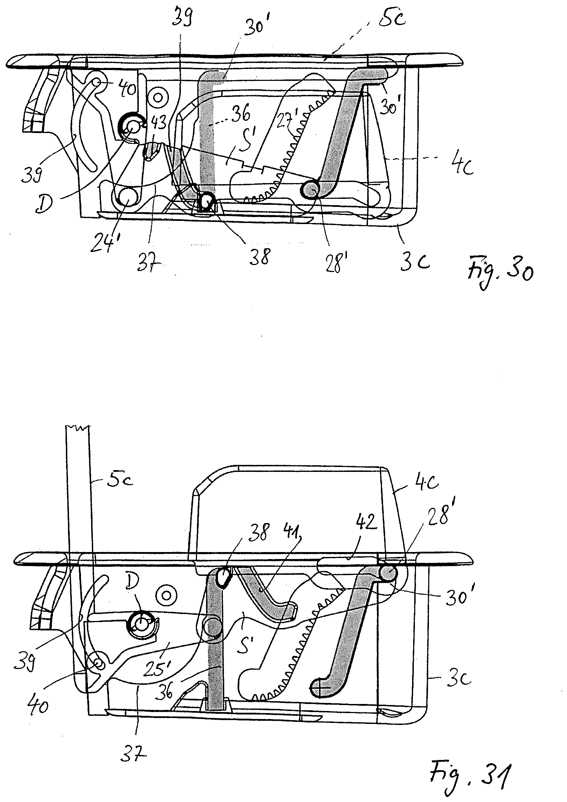

Bei beiden Ausführungsformen wird der Deckel 5b, 5c an den gegenüberliegenden Seiten des Aufnahmebereiches 3b, 3c über jeweils einen Schwenkhebel 25, 25' um eine Schwenkachse D drehbar gelagert. Auf beiden Seiten ist dem jeweiligen Deckel 5b, 5c jeweils eine Schenkelfeder 23, 23' zugeordnet, die den Deckel 5b, 5c in Öffnungsrichtung drehmomentbeaufschlagt. Eine Schwenkbewegung des Deckels 5b, 5c ist bei beiden Ausführungsformen durch einen in eine kreisbogenförmige Kulissenführung hineinragenden Anschlagzapfen begrenzt, der einstückig mit dem jeweiligen Deckel 5b, 5c ist. Die Kulissenführung ist in der jeweiligen Seite des Aufnahmebereiches 3b, 3c vorgesehen und koaxial kreisbogenförmig zur Drehachse D ausgeführt (für die Aufnahmevorrichtung 2c in Fig. 31 Kulissenführung 39 und Anschlagzapfen 40). In der geöffneten Funktionsstellung ist der Deckel 5b, 5c rechtwinklig zu seiner Schließstellung (Fig. 8, Fig. 24) ausgerichtet. Für ein Schließen des Deckels 5b, 5c aus dieser offenstehenden Funktionsstellung wird manuell Druck auf den Deckel 5b, 5c ausgeübt, der die entgegengerichtete Federkraft der Schenkelfedern 23, 23' überwindet und den Deckel 5b, 5c in die Schließstellung zurückführt, in der er durch die Verriegelungseinheit 6b, 10b; 6c, 10c gesichert wird.

Beide Aufnahmebereiche 3b, 3c sind mit elastisch nachgiebigen Raststegen R zum Einrasten in einen entsprechenden Rahmenabschnitt der Mittelarmlehne 1 versehen. Dadurch ist ein werkzeugloses Befestigen der jeweiligen Aufnahmevorrichtung 2b, 2c in dem entsprechenden Rahmenabschnitt des Fahrzeuginnenraumes ermöglicht.

Mittels der Steuerkörper S, S' werden die Halterahmen 4b, 4c bei beiden Aufnahmevorrichtungen 2b, 2c aus einer unteren Ruhelage in eine obere Endlage hubverlagert und anschließend um einen geringen Betrag rechtwinklig zur Hubbewegung vom Deckel 5b, 5c weg nach vorne querverlagert. Dieser begrenzte Querverlagerungsweg der Halterahmen 4b, 4c bei beiden Aufnahmevorrichtungen 2b, 2c gewährleistet es, dass der jeweilige Halterahmen 4b, 4c formschlüssig gegen ein Nachuntendrücken abgestützt ist. Die Stützung ist selbsthemmend, so dass ein Druck von oben auf den Halterahmen 4b, 4c in der ausgefahrenen Funktionsstellung zu keiner Bewegung des Halterahmens 4b, 4c nach unten führen kann. Vielmehr muss der Halterahmen 4b, 4c zunächst durch entsprechende Verschwenkung des Deckels 5b, 5c und zugehörige Zwangskopplung über die Steuerkörper S, S' wieder den Querverlagerungsweg zurück machen, bevor ein Absenken des jeweiligen Halterahmens 4b, 4c erfolgen kann.

Bei der Aufnahmevorrichtung 2b gemäß den Figuren 8 bis 23 sind die beiden gegenüberliegenden Steuerkörper S quer zur Hubbewegungsrichtung des Halterahmens 4b linearbeweglich am Aufnahmebereich 3b gelagert. Hierzu sind am Aufnahmebereich 3b Führungsstege 32 vorgesehen, denen am jeweiligen Steuerkörper S zugehörige Führungsnuten 33 zugeordnet sind, die komplementär zu den Führungsstegen 32 am Steuerkörper S angeordnet und ausgerichtet sind. Jeder Stützhebel 25 des Deckels 5b weist einen von der Drehachse D abragenden Hebelfortsatz auf, der in einer in Hochrichtung ausgerichteten, linearen Kulissenführung 31 des Steuerkörpers S mittels eines Kulissenzapfens 24 gelagert ist.

Der Halterahmen 4b ist an seinen gegenüberliegenden Seiten mittels jeweils zwei zueinander horizontal beabstandeten Lagerpunkten 28 in etwa vertikal verlaufenden Führungsprofilierungen 29 der jeweiligen Seite des Aufnahmebereiches 3b höhenverschiebbar. Die Führungsprofilierungen 29 weisen an ihren oberen Endbereichen zwei horizontal gleichgerichtet wegragende Kulissenfortsätze 30 auf, die dazu dienen, die Lagerpunkte 28 des Halterahmens 4b in der oberen Hublage des Halterahmens 4b vom Deckel 5b weg quer zu verlagern.

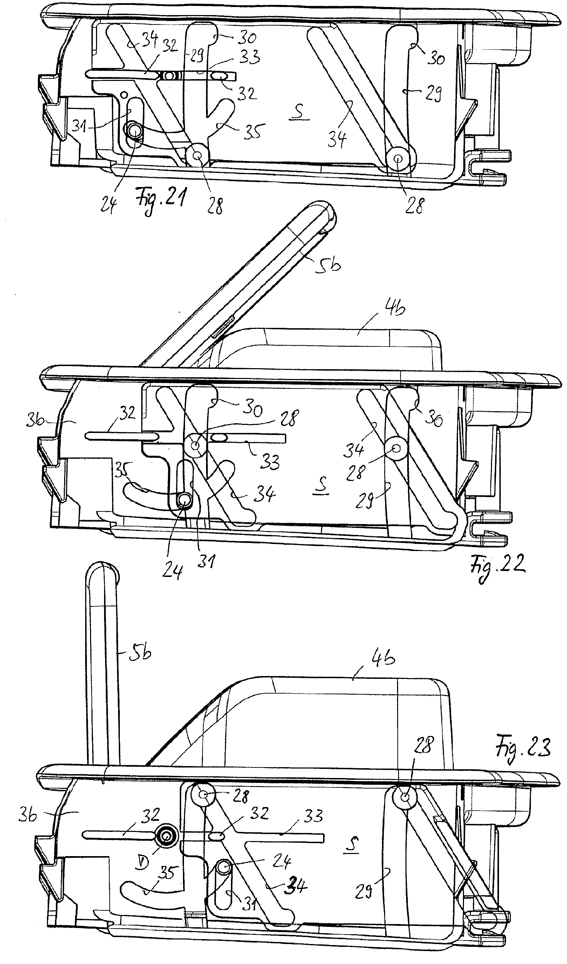

Die Kopplung der Steuerkörper S mit dem Deckel 5b erfolgt über den in die jeweilige vertikale Kulissenführung 31 des jeweiligen Steuerkörpers S eingreifenden Kulissenzapfen 24, der am Aufnahmebereich ergänzend in einer kreisbogenförmigen Kulissennut 35 geführt ist, die koaxial zur Drehachse D ausgerichtet ist (siehe insbesondere Figuren 21 bis 23). Dadurch führt zwangsläufig eine Schwenkbewegung des Deckels 5b zu einer Horizontalverschiebung des jeweiligen Steuerkörpers S längs der Führungsstege 32 und damit parallel zu einer oberen Randkante des Aufnahmebereiches 3b. Um diese Verschiebebewegung des Steuerkörpers S in eine Hubbewegung des Halterahmens 4b nach oben oder nach unten umzusetzen, ist jeder Steuerkörper S mit zwei parallel zueinander verlaufenden und schräg zur Verlagerungsrichtung des Steuerkörpers S ausgerichteten Führungsprofilierungen 34 versehen. Diese sind in einem Winkel von etwa 60° zur Horizontalen und demzufolge etwa in einem Winkel von etwa 30° zur Vertikalen ausgerichtet. In den Führungsprofilierungen 34 sind die Lagerpunkte 28 des Halterahmens 4b verschiebbar gelagert, die auch in den vertikalen Führungsprofilierungen 29 des Aufnahmebereiches 3b geführt sind. Die Führungsprofilierungen 34 und 29 kreuzen einander demzufolge. Durch die schräge Ausrichtung der Führungsprofilierungen 34 bewirkt eine horizontale Verlagerungsbewegung des jeweiligen Steuerkörpers S zwangsläufig eine Verschiebung der Lagerpunkte 28 längs der Führungsprofilierungen 34 und demzufolge auch eine Hubbewegung nach oben oder nach unten längs der Führungsprofilierungen 29. Bei Erreichen der oberen Hublage der Lagerpunkte 28 in den Führungsprofilierungen 29 ist die Schwenkbewegung des Deckels 5b in Richtung seiner geöffneten Endposition noch nicht zu Ende gebracht. Demzufolge führt die verbleibende Schwenkbewegung des Deckels 5b bis zur senkrecht offenen Endlage dazu, dass die Kulissenzapfen 24 die Steuerkörper S in der oberen Hublage der Führungsprofilierungen 29 die Lagerpunkte 28 noch um einen geringen Betrag in Querrichtung drücken, wodurch die Lagerpunkte 28 in die Kulissenfortsätze 30 vom Deckel weg in Richtung der Verriegelungseinheit 6b, 10b bewegt werden. Hierdurch wird der Halterahmen 4b zwangsläufig in Querrichtung mitverlagert. Dadurch ist eine selbsthemmende Abstützung des Halterahmens 4b in Hochrichtung nach unten gewährleistet. Der Halterahmen 4b ist in seiner ausgefahrenen Funktionsstellung gegen ein Absenken nach unten blockiert. Bei einem Schließen des Deckels 5b werden zunächst die Lagerpunkte 28 wieder aus den horizontalen Kulissenfortsätzen 30 zurückgezogen, bevor der Halterahmen 4b abgesenkt werden kann. Demzufolge macht auch der Halterahmen 4b beim Lösen aus seiner oberen Funktionsstellung zunächst wieder eine geringfügige Horizontalbewegung in Richtung des Deckels 5b, bevor die Absenkbewegung beginnt.

Bezüglich der Aufnahmevorrichtung 2c nach den Figuren 24 bis 31 wird nachfolgend lediglich auf die Unterschiede zur Aufnahmevorrichtung 2b nach den Figuren 8 bis 23 eingegangen. Im Übrigen gilt das zuvor zu der Aufnahmevorrichtung 2b Gesagte für die Aufnahmevorrichtung 2c in gleichem Maße.

Die Aufnahmevorrichtung 2c nach den Figuren 24 bis 31 weist auf jeder Seite des Aufnahmebereiches 3c jeweils einen Steuerkörper S' auf, der längs einer Kurvenbahn an der jeweiligen Seite des Aufnahmebereiches 3c schräg zu einer Hubrichtung des Halterahmens 4c beweglich gelagert ist. Der Halterahmen 4c ist im Bereich jedes Steuerkörpers S' mit einem hinteren, der Drehachse D des Deckels 5c zugewandten Lagerzapfen 38 versehen, der in einer vertikalen Kulissenführung 36 des Aufnahmebereiches 3c hubbeweglich geführt ist. Ein vorderer Lagerzapfen 28' des Halterahmens 4c ist nicht stationär zum Halterahmen 4c wie der Lagerzapfen 38, sondern vielmehr in einer Kulissenführung 42 des Halterahmens 4c verschiebbar gelagert. Die Kulissenführung 42 ist einstückig seitlich am Halterahmen 4c vorgesehen. Der Lagerzapfen 28' ist einerseits in dieser Kulissenführung 42 und andererseits in einer S-artig schräg verlaufenden Kulissenführung 29' am Aufnahmebereich 3c geführt. Außenseitig ist der Lagerzapfen 28' zudem am Steuerkörper S' gehalten. Die Kulissenführung 29' ist in ihrem oberen Endbereich mit einem horizontalen Kulissenfortsatz 30' versehen, der in einer oberen Hublage des Halterahmens 4c eine Querverlagerung des Halterahmens 4c analog dem Halterahmen 4b gemäß den Figuren 8 bis 23 bewirkt. Im Steuerkörper S' ist zudem eine Kurvenbahn 41 zur Führung des hinteren Lagerzapfens 38 vorgesehen. Zusätzlich ist der Steuerkörper S' mit einer Stütztasche 43 versehen, in die der Lagerzapfen 38 in oberer Hublage des Halterahmens 4c eintaucht und so eine notwendige Abstützung für die obere Endlage bewirkt, in der der Lagerzapfen 28' in den Kulissenfortsatz 30' der Kulissenführung 29' eingefahren ist. Der Halterahmen 4c führt durch die Steuerkinematik, die durch den Steuerkörper S' und die zuvor beschriebenen Führungsprofilierungen definiert ist, zunächst eine Hubbewegung nach oben durch, bevor in der oberen Hublage analog zum Halterahmen 4b die auf einen geringen Weg begrenzte Querverlagerung relativ zum Aufnahmebereich 3c nach vorne erfolgt. Je nach Gestaltung der Führungsprofilierungen der Steuerkinematik kann der Halterahmen 4c während seiner Überführung in die obere Endlage oder die untere Endlage zwischenzeitlich auch kurzfristige Kippbewegungen durchführen. So wird insbesondere ein Lösen des Halterahmens 4c aus der oberen Funktionsstellung gemäß Fig. 31 dadurch bewirkt, dass der Deckel 5c wieder in Richtung seiner Schließposition bewegt wird. Dadurch verschwenkt der Hebelfortsatz 25' des Stützhebels des Deckels 5c den Steuerkörper S' nach unten, wobei der als Stützzapfen dienende Lagerzapfen 38 aus der Aufnahmetasche 43 des Steuerkörper S' freikommt und wieder in die Kulissenbahn 41 des Steuerkörpers S' eintaucht. Gleichzeitig wird auch der als Lagerpunkt dienende Lagerzapfen 28' aus dem Kulissenfortsatz 30' der schrägen Kulissenbahn 29' herausgezogen und gemeinsam mit dem Steuerkörper S' abgesenkt. Bei Erreichen einer unteren Lage der Führungsbahn 29' wird der Lagerzapfen 28' in den unteren, horizontal nach hinten abragenden Stirnendbereich der Führungsbahn 29' eingeführt, wodurch die untere Endposition des Steuerkörpers S' gemäß Fig. 30 erreicht ist.

## Patentansprüche

1. Aufnahmevorrichtung für wenigstens ein Flaschen- oder Becherbehältnis in einem Fahrzeuginnenraum mit einem Aufnahmebereich, sowie mit einem relativ zu dem Aufnahmebereich hubbeweglich gelagerten Halterahmen, und mit einem an dem Aufnahmebereich angelenkten Deckel zum Verschließen und Freigeben des Aufnahmebereiches, wobei der Deckel und der Halterahmen zumindest über einen Teil ihrer Bewegungswege mittels einer Zwangsführung miteinander gekoppelt sind, wobei die Zwangsführung eine am Aufnahmebereich (3b, 3c) gelagerte Steuermechanik (S, S') aufweist, die mit dem Deckel (5b, 5c) und mit dem Halterahmen (4b, 4c) bewegungsübertragend gekoppelt ist, wobei für eine ausgefahrene Funktionsstellung des Halterahmens (4b, 4c) eine Blockiereinrichtung vorgesehen ist, wobei eine Führungsmechanik zur hubbeweglichen Verlagerung des Halterahmens (4b, 4c) relativ zu dem Aufnahmebereich (3b, 3c) vorgesehen ist, und wobei die Führungsmechanik an einem oberen Endbereich eine auf einen kurzen Weg begrenzte Querführung (30') umfasst, die den Halterahmen (4b, 4c) nach Erreichen einer oberen Endlage vom Deckel (5b, 5c) weg querverlagert.

2. Aufnahmevorrichtung nach Anspruch 1, **dadurch gekennzeichnet, dass** die Steuermechanik wenigstens einen am Aufnahmebereich (3b, 3c) geführten und relativ zu dem Aufnahmebereich verlagerbaren Steuerkörper (S, S') umfasst, der mit dem Halterahmen (4b, 4c) gekoppelt ist.

3. Aufnahmevorrichtung nach Anspruch 2, **dadurch gekennzeichnet, dass** eine Bewegungsrichtung des Steuerkörpers (S, S') unterschiedlich ist zu einer Hubbewegungsrichtung des Halterahmens (4b, 4c).

4. Aufnahmevorrichtung nach Anspruch 3, **dadurch gekennzeichnet, dass** der Steuerkörper (S, S') am Aufnahmebereich (3b, 3c) quer oder schräg zu einer Hubbewegungsrichtung des Halterahmens (4b, 4c) beweglich gelagert ist.

5. Aufnahmevorrichtung nach einem der vorhergehenden Ansprüche, **dadurch gekennzeichnet, dass** eine Dämpfungseinheit (26, 27, 27') zur Dämpfung von Verlagerungsbewegungen des Steuerkörpers (S, S') vorgesehen ist.

## Claims

1. Receiving device for at least one bottle or cup container in a vehicle interior compartment, with a receiving region and with a holding frame which is mounted to be liftable relative to the receiving region, and with a cover which is articulated on the receiving region for closing and opening up the receiving region, wherein the cover and the holding frame are coupled to each other over at least part of their movement paths by means of a positive guide, wherein the positive guide has a control mechanism (S, S') which is mounted on the receiving region (3b, 3c) and is coupled to the cover (5b, 5c) and to the holding frame (4b, 4c) so as to transmit movement, wherein for an extended functional position of the holding frame (4b, 4c) a blocking device is provided, wherein a guide mechanism for the liftable shifting of the holding frame (4b, 4c) relative to the receiving region (3b, 3c) is provided, and wherein the guide mechanism comprises, at an upper end region, a transverse guide (30') which is limited to a short path and transversely shifts the holding frame (4b, 4c), after the latter has reached an upper end position, away from the cover (5b, 5c).

2. Receiving device according to claim 1, **characterized in that** the control mechanism comprises at least one control body (S, S') which is guided on the receiving region (3b, 3c) and is shiftable relative to the receiving region and is coupled to the holding frame (4b, 4c).

3. Receiving device according to claim 2, **characterized in that** a direction of movement of the control body (S, S') differs from a lifting direction of movement of the holding frame (4b, 4c).

4. Receiving device according to claim 3, **characterized in that** the control body (S, S') is mounted to be movable on the receiving region (3b, 3c) transversely or obliquely with respect to a lifting direction of movement of the holding frame (4b, 4c).

5. Receiving device according to any of the preceding claims, **characterized in that** a damping unit (26, 27, 27') for damping shifting movements of the control body (S, S') is provided.

## Revendications

1. Dispositif de réception pour au moins un récipient de bouteille ou de gobelet dans un espace intérieur d'un véhicule avec une région de réception ainsi qu'avec un cadre porteur monté pour un mouvement de levage par rapport à la région de réception, et avec un couvercle articulé sur la région de réception pour fermer et ouvrir la région de réception, dans lequel le couvercle et le cadre porteur sont couplés l'un à l'autre au moins sur une partie de leurs voies de mouvement par le biais d'un guidage forcé, dans lequel le guidage forcé présente un mécanisme de commande (S, S') monté sur la région de réception (3b, 3c) et couplé au couvercle (5b, 5c) et le cadre porteur (4b, 4c) pour transmettre le mouvement, dans lequel un dispositif de blocage est agencé pour une position fonctionnelle étendue du cadre porteur (4b, 4c), dans lequel un mécanisme de guidage est agencé pour un déplacement élevant du cadre porteur (4b, 4c) par rapport à la région de réception (3b, 3c), et dans lequel le mécanisme de guidage comprend, à une région d'extrémité supérieure, un guide transversal (30') qui est limité à une distance courte et déplace le cadre porteur (4b, 4c) transversalement, après avoir attend une position finale supérieure, à l'écart du couvercle (5b, 5c).

2. Dispositif de réception selon la revendication 1, **caractérisé en ce que** le mécanisme de commande comprend au moins un corps de commande (S, S') guidé sur la région de réception (3b, 3c) et déplaçable par rapport à la région de réception, ledit corps étant couplé au cadre porteur (4b, 4c).

3. Dispositif de réception selon la revendication 2, **caractérisé en ce qu'**une direction de mouvement du corps de commande (S, S') est différent d'une direction de mouvement de levage du cadre porteur (4b, 4c).

4. Dispositif de réception selon la revendication 3, **caractérisé en ce que** le corps de commande (S, S') est monté sur la région de réception (3b, 3c) de telle manière qu'il est mobile transversalement ou obliquement par rapport à une direction de mouvement de levage du cadre porteur (4b, 4c).

5. Dispositif de réception selon l'une quelconque des revendications précédentes, **caractérisé en ce qu'**une unité d'atténuateur (26, 27, 27') est agencée pour l'atténuation de mouvements de déplacement du corps de commande (S, S').
